# EUROPEAN PATENT APPLICATION

(11) **EP 4 749 484 A1**
(43) Date of publication of application: **27.05.2026**
(21) Application number: 25216955.2
(22) Date of filing: 19.11.2025
(51) Int. Cl.: G06F 17/16, G06N 3/063

(54) **METHOD AND DEVICE WITH DYNAMIC QUANTIZATION**

(30) Priority: 22.11.2024 KR 20240168607
(71) Applicant: Samsung Electronics Co., Ltd., Suwon-si, Gyeonggi-do 16677 (KR)
(72) Inventor: Lee, Won-Jo, 16678 Suwon-si, Gyeonggi-do (KR); Yu, Jaehoon, 16678 Suwon-si, Gyeonggi-do (KR); Choi, Minjeong, 16678 Suwon-si, Gyeonggi-do (KR)
(74) Representative: Grünecker Patent- und Rechtsanwälte PartG mbB

(57) **Abstract**

A dynamic quantization method and a dynamic quantization apparatus are disclosed. The dynamic quantization method includes obtaining statistical information for quantization by applying an orthogonal matrix to input data, determining a scaling factor based on the statistical information, performing scaling on the input data by the scaling factor, and performing dynamic quantization based on a result of the scaling.

## Description

### BACKGROUND

### 1. Field

The following description relates to a method and device with dynamic quantization.

### 2. Description of Related Art

A large language model (LLM) is emerging as one of the models of deep learning. An LLM typically receives a query in the form of text and outputs an answer corresponding thereto and may have a variable ranging in size from several billion units more than 100 billion units.

The capacity of dynamic random-access memory (DRAM) of devices for operating an LLM may be relatively small compared to the size of a large LLM. As a method of overcoming such hardware limitations, a technique of reducing the size of a model by applying quantization to an LLM is widely used for an enabling a practical service that uses the LLM.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a dynamic quantization method performed by a computing device includes: applying an orthogonal matrix to input data and obtaining statistical information for quantization based thereon; determining a scaling factor based on the statistical information; performing scaling on the input data by the scaling factor; and performing dynamic quantization on the scaled input data.

The orthogonal matrix may be generated, the applying the orthogonal matrix to the input data may include multiplying the orthogonal matrix by the input data, and the statistical information may be obtained by determining a statistic of a result of the multiplying.

The statistical information may include a statistic of a result of applying the orthogonal matrix to the input data, and the statistic may be an average value, a maximum value, or a variable.

The orthogonal matrix may be formed by {-1,0,1}.

The input data may include quantization units, and the determining of the scaling factor may include determining the scaling factor differently for each quantization unit.

The performing of the scaling may include: determining whether the input data is in floating-point (FP) form or integer (INT) form, and performing the scaling on the input data by selectively, according to the determined form of the input data, using a floating-point (FP) operator or a shifter.

The input data may include quantization units, and the performing of the scaling may include performing the scaling for each quantization unit.

The performing of the scaling on the input data for a quantization unit may include: in response to the quantization unit being a channel unit, performing the scaling by an operation between a scalar value corresponding to the channel unit and a scalar value corresponding to the input data; and in response to the quantization unit being a block unit, performing the scaling by an operation between a vector value corresponding to the block unit and a scalar value corresponding to the input data.

Each quantization unit may be a channel unit, a block unit, or a tensor unit.

The performing of the dynamic quantization on the scaled input data may be further based on a target quantization value set by a user or set automatically by an algorithm.

The dynamic quantization method may further include: restoring the dynamically quantized scaled input data using the inverse of the scaling factor and using the transpose of the orthogonal matrix; and multiplying the restored dynamically quantized scaled input data by a weight and outputting a result.

The restoring of the dynamically quantized scaled input data may include: calculating first restored dynamically quantized scaled input data by applying the inverse of the scaling factor to the dynamically quantized scaled input data; and multiplying the transpose of the orthogonal matrix by the first restored quantized data.

The transpose of the orthogonal matrix and the weight may be pre-calculated offline.

The dynamic quantization method may further include: in response to the input data being in floating point (FP) form, converting the input data in FP form into an integer (INT) form before applying the orthogonal matrix to the input data.

A non-transitory computer-readable storage medium stores instructions that, when executed by one or more processors, cause the one or more processors to perform any of the dynamic quantization methods.

In another general aspect, a dynamic quantization apparatus includes: one or more processors; and memory storing instructions configured to cause the one or more processors to: obtain statistical information for quantization by applying an orthogonal matrix to the input data; determine a scaling factor based on the statistical information, perform scaling on the input data by the scaling factor; and perform dynamic quantization on the scaled input data.

The orthogonal matrix may be generated, the applying the orthogonal matrix to the input data may include multiplying the orthogonal matrix by the input data, and the statistical information may be obtained by determining a statistic of a result of the multiplying.

The instructions may be further configured to cause the one or more processors to determine whether the input data is in floating-point (FP) form or integer (INT) form and perform the scaling on the input data by selectively, according to the determined form of the input data, using a floating-point (FP) operator or a shifter.

The input data may include quantization units, the scaling factor may be determined differently for each quantization unit, and each quantization unit may be a channel unit, a block unit, or a tensor unit.

In another general aspect, a method of quantizing input data includes: storing, in a memory, input data; generating, by one or more processors, an input matrix by multiplying the input data by an orthogonal matrix; determining, by the one or more processors, a downscaling factor based on a statistic derived from the input matrix; downscaling, by the one or more processors, the input matrix with the downscaling factor; generating, by the one or more processors, a quantized input matrix by reducing a bit-size of elements of the downscaled input matrix; upscaling, by the one or more processors, the quantized input matrix with the inverse of the downscaling factor; and generating, by the one or more processors, a quantized version of the input data by applying the transpose of the orthogonal matrix to the upscaled quantized input matrix.

Other features and aspects will be apparent from the following detailed description, the drawings, and the claims.

### BRIEF DESCRIPTION OF THE DRAWINGS

FIG. 1A illustrates an example of a distribution of statistical outliers of an activation function and weight of a neural network model, according to one or more embodiments.
FIG. 1B illustrates an example of a distribution before and after applying an orthogonal matrix to an activation function, according to one or more embodiments.
FIG. 2 illustrates an example of a dynamic quantization method, according to one or more embodiments.
FIG. 3 illustrates an example of a dynamic quantization method, according to one or more embodiments.
FIG. 4 illustrates an example of a dynamic quantization method, according to one or more embodiments.
FIG. 5 illustrates an example of a method of obtaining statistical information for quantization, according to one or more embodiments.
FIG. 6 illustrates an example of a method of performing scaling on input data for each quantization unit, according to one or more embodiments.
FIG. 7 illustrates an example of a method of performing scaling on input data for each quantization unit, according to one or more embodiments.
FIG. 8 illustrates an example of a dynamic quantization method, according to one or more embodiments.
FIG. 9 illustrates an example of a dynamic quantization method, according to one or more embodiments.
FIG. 10 illustrates an example of a dynamic quantization apparatus, according to one or more embodiments.
FIG. 11 illustrates an example of a dynamic quantization apparatus, according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

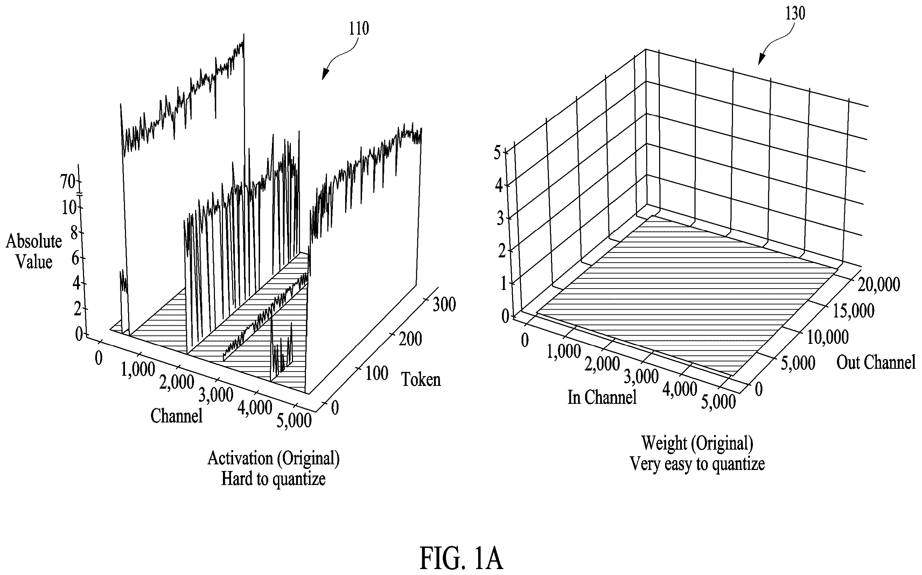

FIG. 1A illustrates an example of a distribution of statistical outliers of an activation function and weights of a neural network model, according to one or more embodiments. In FIG. 1A, graph 110 shows a distribution of statistical outliers of activations of a network model and graph 130 shows a distribution of outliers of weights of the network model.

Quantization generally involves mapping values of the weights and activations (of an activation function) of a neural network model (or a deep learning model) to an integer (INT) range. In the case of activations, as shown in the graph 110, a small number of activations may be relatively very large compared to an average, so quantization may be difficult; information loss from quantization may be significant. In particular, an abnormally large activation may cause a quantization error when quantization is performed by evenly dividing the range of the entire variable. As described above, the abnormally large value may be referred to as an outlier. Depending on how an outlier is processed, the performance of the neural network model may vary after quantization, with poor quantization resulting in degradation of the network model.

As described above, one of the important parts in applying quantization to a neural network model is a method of processing outliers. The activation outliers shown in graph 110 may be higher than the outliers of the weights shown in the graph 130. Accordingly, quantization of the activations shown in the graph 110 may be more difficult than quantization of the weights shown in the graph 130. In addition, the activation outliers may have a greater impact on the quantization error of the neural network model.

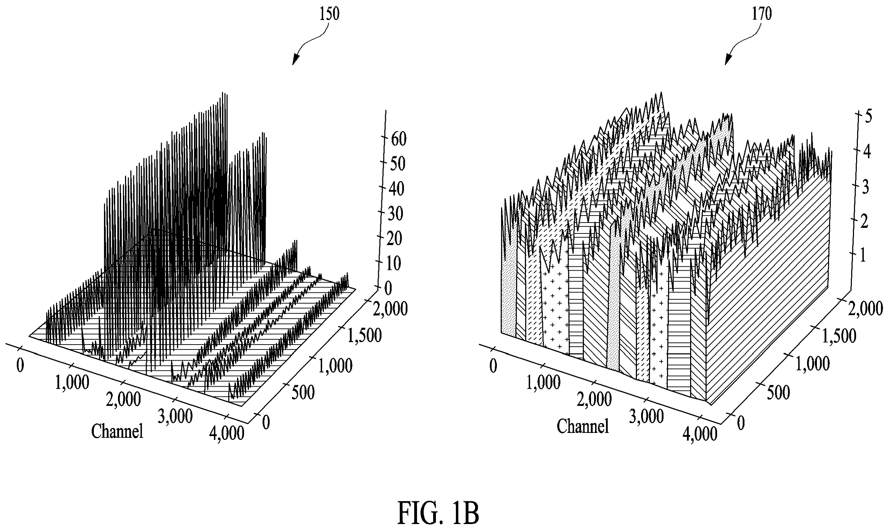

To process the outliers, certain channels of the weights and activations to which the outliers belong may be separately classified in advance through model profiling, may be quantized and processed with full precision or a relatively high number of bits, and then may be reordered by hardware (HW) awareness. Depending on the algorithm, in addition to using a channel as a quantization unit, a smaller unit, such as a block or an element, may be used as a quantization unit. However, since this method only considers the compression ratio and accuracy of a model as performance indicators without considering characteristics (e.g., bit width) the relevant HW device, the latency of quantization may increase. Among the techniques of processing outliers, a technique using an orthogonal matrix may be used, as shown in FIG. 1B below.

FIG. 1B illustrates an example of a distribution before and after applying an orthogonal matrix to activation function values (i.e., activations), according to one or more embodiments. In FIG. 1B, graph 150 shows a distribution of activations before having an orthogonal matrix applied thereto, and graph 170 shows the distribution of activations after having the orthogonal matrix applied thereto. In the graph 150, it may be seen that the outlier activations before application of the orthogonal matrix are unevenly distributed, whereas after application of the orthogonal matrix the distribution is somewhat even, as shown in graph 170.

A technique of using an orthogonal matrix to process outliers may evenly disperse or distribute the outliers over the entire dimension by multiplying the activations representing the outliers by the orthogonal matrix and changing a dimension.

However, when quantization is applied after distributing outliers to different dimensions, there may still be values or outliers that are too large to be processed with a low number of bits even though the outliers are distributed to different dimensions.

That is, even when the technique of applying an orthogonal matrix is used, it may still be difficult to express the maximal activations with a small number of bits. To resolve this difficulty, a method of applying quantization (after distributing the outliers to different dimensions) may be used by applying an orthogonal matrix in a layer unit (e.g., for each layer, as shown in the graph 170, without separately processing the activation outliers through reordering. When quantization is applied after distributing the outliers to different dimensions, the possibility that the channels of the outliers obtained through model profiling may differ from input data during actual testing and/or service may be reduced or even excluded. Additionally, when quantization is performed with the same number of bits, the accuracy may be higher than when using a method of obtaining and processing the outliers separately in a channel unit or a value unit. In addition, the technique of using the orthogonal matrix may be used in combination with a method of optimizing the outliers of the weights.

If an operation of multiplying the orthogonal matrix is performed as a floating-point (FP) operation, the result may occupy a large memory space (given that the orthogonal matrix is large), and the process may incur a high hardware cost as compared to applying the orthogonal matrix with an INT operation.

By using an orthogonal matrix and performing dynamic quantization with a scaling factor determined from statistical information at the same time, quantization may be performed with high efficiency and with good accuracy maintenance. The dynamic quantization may include dynamic scaling, which may involve dynamically determining the scaling factor to be multiplied by the activations according to the range of data used in the neural network model. Dynamic scaling may adjust the magnification/scale, that is, the scaling factor, according to the characteristics of a data set such that the neural network model may maintain optimal performance.

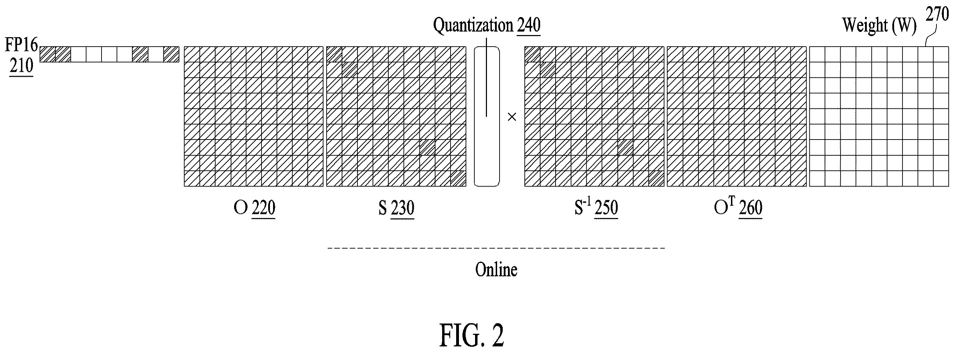

FIG. 2 illustrates an example of a dynamic quantization method, according to one or more embodiments.

Most quantization techniques may be applied to a deep learning model, with accuracy reduction of memory footprints as two determinative criteria. However, quantization techniques that do not consider the operations of the implementing HW may actually increase latency and may not efficiently use HW resources. In addition, costs may increase even when a quantization technique is implemented in a dedicated HW device.

A dynamic quantization apparatus may directly generate an orthogonal matrix or may call and use a stored orthogonal matrix. Regardless of how obtained, given the orthogonal matrix, the dynamic quantization apparatus may collect pieces of statistical information for dynamic quantization during the process of applying the orthogonal matrix to input data, for example.

As described above, applying an orthogonal matrix, e.g., to the input data, disperses outliers of the input data, but there may still be a tendency to have a wide range of values even after going this process. In this case, the dynamic quantization apparatus may directly perform dynamic quantization on the input data for each channel or each block/unit using the pieces of statistical information derived during (or right after) the application of the orthogonal matrix. Dynamic quantization may accurately know the range of values of the input data, which may lead to better quantization performance than quantization that is performed offline. The dynamic quantization apparatus may reduce the execution period by collecting the pieces of statistical information while (or right after) performing an operation with the orthogonal matrix. The orthogonal matrix may include, but is not necessarily limited thereto, for example, a rotation matrix, a Hadamard matrix, or a matrix of a stochastic gradient descent (SGD) method using Cayley transformation.

Referring to FIG. 2, the dynamic quantization apparatus may convert input data 210 of 16 bytes in the form of an FP into input data in the form of an INT. In FIG. 2, the portions of the input data 210 that are boldly marked with double hatching are outliers.

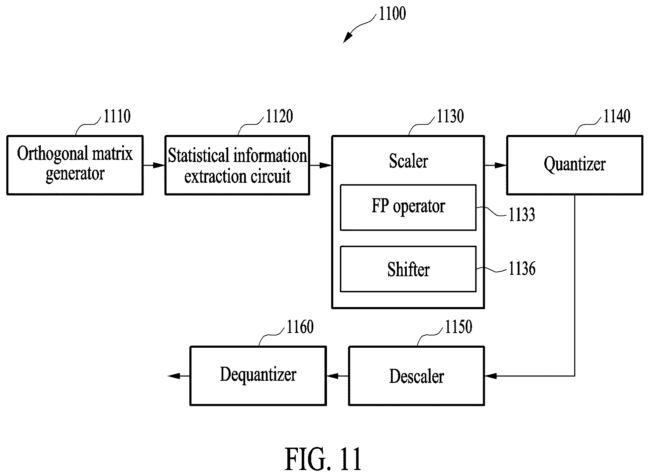

The dynamic quantization apparatus may collect pieces of statistical information used for quantization by applying an orthogonal matrix O 220 to the input data 210 (which may first be converted into INT form). The pieces of statistical information may be collected by, for example, a statistical information extraction circuit 1120 of FIG. 11 but without limitation thereto. Here, the locations of the outliers may be changed by applying the orthogonal matrix O 220 to the input data 210 that has been converted into the form of an INT. The collected pieces of statistical information may be used (i) to determine a scaling factor that is used in a scaling process and/or (ii) to determine a quantization unit in a quantization process. Here, the scaling factor may be referred to as a 'scaling value' or 'magnification.' The scaling factor may be a vector or a scalar.

The dynamic quantization apparatus may calculate a value (e.g., a scaling factor, etc.) required for quantization from the collected pieces of statistical information, perform scaling S 230, and then perform quantization 240. The dynamic quantization apparatus may narrow the range of values by performing the scaling S 230 on the results that are evenly distributed by an operation (e.g., multiplication) with the orthogonal matrix O 220 (in FIG. 2, the matrix above "S 230", which is scaled).

Whether to perform the scaling S 230 and/or the size (or scaling unit) of the scaling factor may be determined according to how many bits the dynamic quantization apparatus performs the quantization 240 for. The scaling unit may be the same as or different than the quantization unit. The dynamic quantization apparatus may omit the scaling S 230 when the number of bits of the quantization target is sufficient. The size of the scaling factor may be determined by a certain rule base. For example, when the statistical information (e.g., the maximum value) of the input data 210 is x and the quantization bit is y, whether the scaling S 230 should be performed may be determined in advance as a rule.

Here, elements that act as hyperparameters, which determine the size of the scaling factor, may be the sizes of the quantization unit (e.g., a block unit, a channel unit, and a tensor unit) and the number of bits that the data quantized into but are not necessarily limited thereto.

The dynamic quantization apparatus may restore the range of the down-scaled values by multiplying the input data 210 (which has been quantized through the quantization 240) by the inverse S⁻¹ 250 of the down-scaling factor, i.e., by upscaling. The dynamic quantization apparatus may then restore a distributed dimension of data to an original dimension by multiplying a transpose matrix O^{T} 260 of the orthogonal matrix O 220 by data of which the range of values has been restored and may then output the result of multiplying the data (of which the distributed dimension has been restored to the original dimension) by the weight W 270. Here, the transpose matrix O^{T} 260 of the orthogonal matrix O 220 and the weight W 270 may be pre-calculated offline or otherwise obtained in advance.

With the process described above, the dynamic quantization apparatus may improve performance by lowering the latency during quantization of target HW while reducing implementation costs by the HW device that performs quantization.

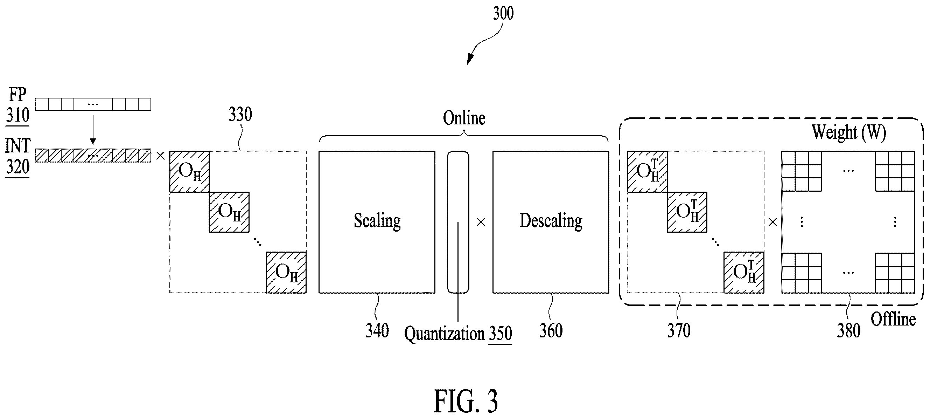

FIG. 3 illustrates an example of a dynamic quantization method, according to one or more embodiments. Diagram 300 shows a process of performing dynamic quantization on input data 310 in the form of an FP when the input data 310 is input to a dynamic quantization apparatus.

The dynamic quantization apparatus may maintain accuracy while lowering calculation complexity by converting the input data 310 (e.g., an activation function) in the form of an FP into input data 320 in the form of an INT.

The dynamic quantization apparatus may multiply the input data 320 (in INT form) by an orthogonal matrix O 330 to disperse the values of the input data 320 (in INT form) into dimensions for each quantization unit (e.g., block unit). The orthogonal matrix O 330 may be, for example, a Hadamard orthogonal matrix but is not necessarily limited thereto. The dimension N of the Hadamard orthogonal matrix may be 2 to the power of an exponent. Given the Hadamard orthogonal matrix of dimension N, for the dimension of 2 to the power of an exponent, the Hadamard orthogonal matrix may be freely generated to be smaller or larger than N.

The orthogonal matrix O 330 may be generated by an orthogonal matrix generator (e.g., an orthogonal matrix generator 1110 of FIG. 11). The orthogonal matrix generator may generate a block-wise Hadamard orthogonal matrix disposed diagonally according to the dimension of the input data 320 (which is in INT form). Here, the orthogonal matrix O 330 multiplied by the input data 320 (in INT form) may disperse outliers included in the input data 320 into different dimensions. In this case, the dimension of the input data 320 in INT form may be the same as the dimension of the orthogonal matrix O 330 that is an operation target. The dynamic quantization apparatus may convert to different dimensions by applying block-wise Hadamard orthogonal matrices of different sizes.

The dynamic quantization apparatus may collect pieces of information (e.g., statistical information) to be used for quantization from the result of applying the orthogonal matrix O 330 to the input data 320 (in INT form) by the orthogonal matrix generator and may dynamically apply the collected pieces of information. The statistical information may include, for example, a range, an average, the maximum value, and/or a variable of values but is not necessarily limited thereto. At the same time, the sizes and/or dimensions of the outliers may be dispersed by applying the orthogonal matrix O 330 to the input data 320 (in INT form).

The dynamic quantization apparatus may extract/obtain a value (e.g., a scaling factor) required for quantization from the statistical information and may perform scaling 340. The scaling 340 may be performed by, for example, a scaler 1130 of FIG. 11 but is not necessarily limited thereto. The dynamic quantization apparatus may dynamically determine the scaling factor based on the statistical information of the input data 320 (in INT form) to which the orthogonal matrix O 330 is applied. The scaling factor (e.g., a downscaling factor) may limit/narrow the range of the values when it is determined that it is still difficult to express the input data 320 (in INT form) with a small number of bits even after converting the dimension.

The dynamic quantization apparatus may perform the scaling 340 (e.g., downscaling) by multiplying the result of applying the orthogonal matrix O 330 to the input data 320 by the scaling factor determined based on the statistical information.

In addition to the scaling factor obtained from the statistical information, the dynamic quantization apparatus may perform quantization 350 using, for example, a weight and/or the maximum value, an average value, and a variable of an activation function as the scaling factor.

For example, the dynamic quantization apparatus may also apply the scaling 340 to a certain channel or a certain block. For example, when the orthogonal matrix O 330 is applied to the input data 320 (in INT form), using the statistical information after the dimension of the input data 320 is converted, the dynamic quantization apparatus may also apply, among the channels of the input data 320, the scaling 340 to a certain channel or a certain block that requires the scaling 340. For example, assuming that 4,096 elements in the form of 8 blocks, each block may include 512 elements. Here, the same scaling factor may be applied to a block of 512 elements. The scaling factor may be applied differently for each certain channel or each certain block. That is, a different scaling factor may be determined for each block.

The scaling factor may freely use forms, such as an FP or 2ⁿ (2 to the power of an exponent), and the configuration of the dynamic quantization apparatus may vary depending on the type of the scaling factor. For example, when the scaling factor is in the form of an FP, the dynamic quantization apparatus may perform, using an FP operator (e.g., an FP operator 1133 of FIG. 11), a calculation of the scaling factor (upscaling), an operation between the scaling factor and data, and an operation between the inverse of the scaling factor and data (downscaling). On the other hand, when the scaling factor is in the form of an INT, the dynamic quantization apparatus may perform, using a shifter (e.g., a shifter 1136 of FIG. 11), a calculation of the scaling factor (downscaling), an operation between the scaling factor and data, and an operation with the inverse of the scaling factor (upscaling).

The dynamic quantization apparatus may perform an operation on the scaling factor in advance and then determine and/or store the scaling factor. When an operation is performed on the scaling factor in advance, the dynamic quantization apparatus may directly apply the scaling factor corresponding to the input data 320 (in INT form) in the process of performing an inference.

The dynamic quantization apparatus may perform the quantization 350 based on the result of the scaling 340. The quantization 350 may be performed by, for example, a quantizer 1140 of FIG. 11, but is not necessarily limited thereto. The dynamic quantization apparatus may perform the quantization 350 using a target number system and may perform dynamic quantization using the pieces of statistical information collected during this process. For example, the dynamic quantization apparatus may reduce the cost of HW by setting the scaling factor to the form of 2 to the power of an exponent and performing the quantization 350 by the shifter.

The dynamic quantization apparatus may perform descaling 360, which multiplies the result of the quantization 350 by the inverse S⁻¹ of the corresponding previous scaling factor, and may thereby restore the range of values of the result of the quantization 350. The descaling 360 may be performed by, for example, a descaler 1150 of FIG. 11 but is not necessarily limited thereto.

The processes of the scaling 340, the quantization 350, and the descaling 360 by the dynamic quantization apparatus may be performed online (e.g., on-the-fly).

The dynamic quantization apparatus may restore the dispersed dimension of data to the original dimension by multiplying data (of which a range of values has been restored) by the transpose matrix O^{T} 370 of the orthogonal matrix O 330. The dynamic quantization apparatus may output the result obtained by multiplying, by a weight W 380, the result of multiplying the data (of which the range of the values has been restored by the transpose matrix O^{T} 370). The process of generating and multiplying the transpose matrix O^{T} 370 by the restored data and multiplying the result by the weight W 380 may be performed by, for example, a dequantizer 1160 of FIG. 11 but is not necessarily limited thereto.

Given an orthogonal matrix O, the matrix O may satisfy the condition of O × *O^{T} = I.* That is, the transpose matrix O^{T} 370 may be the transpose of the orthogonal matrix O 330. Here, the multiplication between the transpose matrix O^{T} 370 and the weight W 380 may be merged offline in advance.

When calibration data (described below) is used, the dynamic quantization apparatus may fixedly determine the range of values of a certain channel after dimension transformation. When pieces of calibration data are input, the dynamic quantization apparatus may record a statistical characteristic of each channel for each piece of calibration data. The statistical characteristic may be, but is not necessarily limited thereto, the absolute maximum value (i.e., abs(max())), the minimum-maximum value (i.e., min-max), or a standard deviation (i.e., std).

The dynamic quantization apparatus may identify the ranges of values required for the respective channels using the channels' respective statistical characteristics. For example, among 1,024 channels, when the range of values of a fifth channel for all pieces of calibration data does not exceed 10 in the absolute maximum value abs(max()) and a scale value is obtained through the absolute maximum value abs(max()) during later quantization, a quantization scale value for the fifth channel may be obtained using the absolute maximum value abs(max()) = 10.

The calibration data is a data set used for static quantization and may usually be an activation value. The calibration data may be generated by taking a portion from training data or verification data to identify the statistical information of a value that is changed while the input data 320 in the form of an INT passes through each layer.

In this case, a scaling value that may not be integrated into the original weight W 380 may also be integrated in the same way as the method of performing an operation between the transpose matrix O^{T} 370 of the orthogonal matrix O 330 and the weight W 380 offline in advance. The scaling value may not be integrated during actual inference in original dynamic quantization, but as described above, the scaling value may also be integrated into the weight W 380 when the range of values of a certain channel may be fixedly determined.

The dynamic quantization apparatus may analyze the input data 310 in the form of an FP offline and specify a channel in which outliers occur. In this case, the dynamic quantization apparatus may reduce an amount of operation and power consumption by not generating the orthogonal matrix O 330 for a channel in which outliers do not occur in the input data 310 in the form of an FP and bypassing an operation. Here, the analysis that is not limited to the size of the input data 310 in the form of an FP may be possible by performing the analysis on the input data 310 in the form of an FP offline.

In addition, when the orthogonal matrix O 330 is multiplied by the values of which the distribution of the input data 310 (e.g., the activation function) in the form of an FP is even, the distribution of the values of the operation result may be concentrated on one side or outliers may be generated. Accordingly, the dynamic quantization apparatus may improve the operation speed and performance of a neural network model by generating the orthogonal matrix O 330 for a channel, which has no outliers or has a ratio of outliers that is lower than a certain reference, of the input data 310 (e.g., the activation function) in the form of an FP and/or bypassing an operation with the orthogonal matrix O 330.

When there are values that are still difficult to quantize with low bits even though the dimension of the input data 320 in the form of an INT is converted, the dynamic quantization apparatus may collect pieces of information (e.g., statistical information) that are applicable to dynamic quantization and may obtain a fast execution time and high efficiency for quantization by performing dynamic quantization by using the statistical information.

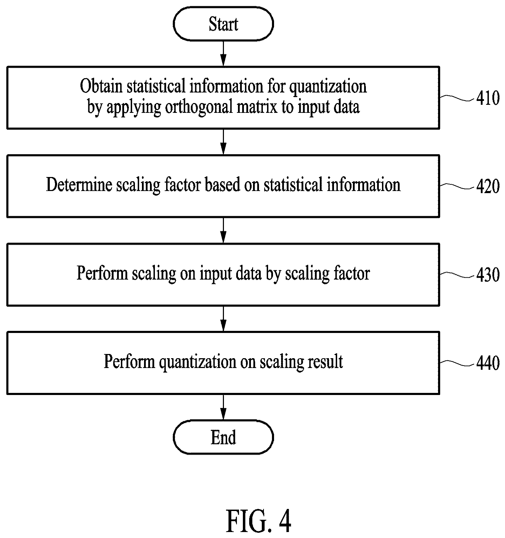

FIG. 4 illustrates an example of a dynamic quantization method, according to one or more embodiments.

Referring to FIG. 4, a dynamic quantization apparatus may perform dynamic quantization through operations 410 to 440.

In operation 410, the dynamic quantization apparatus may obtain statistical information (to be used for quantization) by applying an orthogonal matrix to input data. The input data may be, for example, activations of an activation function but is not necessarily limited thereto. The input data may be, for example, in the form of an INT, but is not necessarily limited thereto. For example, when the input data is input data in the form of an FP, the dynamic quantization apparatus may apply the orthogonal matrix to the input data after converting the input data from FP form into INT form. Here, the orthogonal matrix may be generated by an orthogonal matrix generator included in the dynamic quantization apparatus. The orthogonal matrix may be, for example, a rotation matrix, a Hadamard matrix, or a matrix of an SGD method using Cayley transformation, as non-limiting examples. The orthogonal matrix may be formed by, for example, {-1,0,1} or {-1,1}. . Since activations change with changing input values, the dynamic quantization apparatus may dynamically perform quantization according to the changing activations.

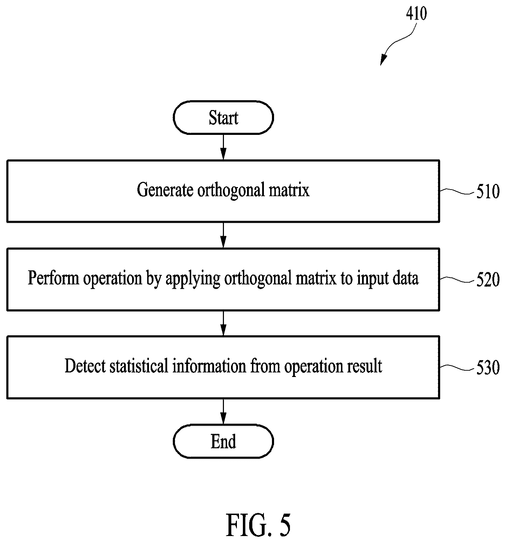

Hereinafter, the 'statistical information' may refer to statistical information of the input data (in INT form) to which the orthogonal matrix has been applied. The statistical information may also be referred to as a 'statistical characteristic.' The statistical information may include, but is not necessarily limited thereto, an average value, the maximum value, the minimum value, or a variable of the input data in the form of an INT to which the orthogonal matrix is applied. A method of obtaining the statistical information by the dynamic quantization apparatus is described with reference to FIG. 5.

In operation 420, the dynamic quantization apparatus may determine a scaling factor based on the statistical information obtained from operation 410. The dynamic quantization apparatus may determine the scaling factor differently for each quantization unit (a unit of data being quantized). Here, the quantization unit may include, but is not necessarily limited thereto, at least one of a channel unit, a block unit, or a tensor unit. For example, when the statistical information is the maximum value of the activations and the quantization unit is a block unit, the dynamic quantization apparatus may determine, to be the scaling factor for each block unit, a value that is less than (or less than or equal to) the maximum value of each block unit. Alternatively, when the quantization unit is a channel unit, the dynamic quantization apparatus may determine, to be the scaling factor for each block unit, a value that is less than the maximum value of each channel unit. For example, when the input data is the activation function, the dynamic quantization apparatus may perform scaling by using the statistical information (e.g., the maximum value of the activation function) as the scaling factor.

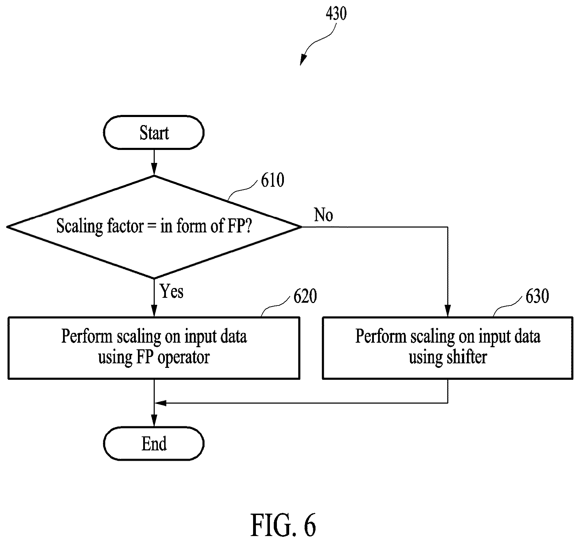

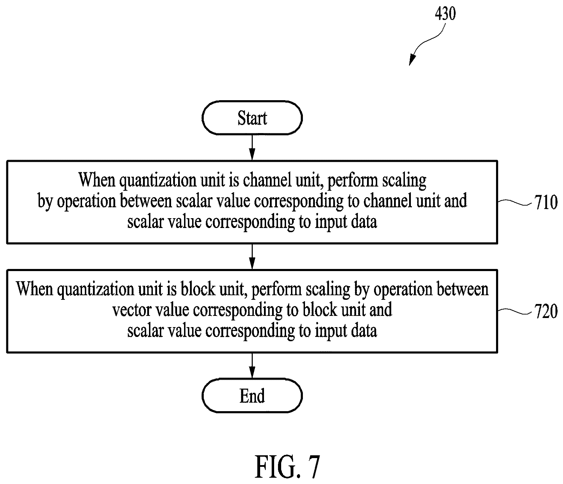

In operation 430, the dynamic quantization apparatus may perform scaling on the input data by applying the scaling factor determined in operation 420. Scaling may be performed by selectively using different devices (e.g., an FP operator or a shifter) depending on whether the scaling factor is in FP form or is in INT form. In addition, the dynamic quantization apparatus may perform scaling by different operation methods (e.g., an operation between a scalar value and a scalar value or an operation between a vector value and a scalar value) depending on the quantization unit (e.g., a channel unit or a block unit). Additionally, the dynamic quantization apparatus may determine the scaling factor differently for each quantization unit. A method of performing scaling by the dynamic quantization apparatus is described with reference to FIGS. 6 and 7.

In operation 440, the dynamic quantization apparatus may perform quantization on the scaling result obtained from operation 430. The dynamic quantization apparatus may perform the quantization on the scaling result based on a target value set by a user or a target value automatically set by an algorithm.

FIG. 5 illustrates an example of a method of obtaining statistical information for quantization, according to one or more embodiments. Referring to FIG. 5, a dynamic quantization apparatus may detect the statistical information through operations 510 to 530.

In operation 510, the dynamic quantization apparatus may generate or otherwise obtain an orthogonal matrix. The dynamic quantization apparatus may generate the orthogonal matrix by using a Hadamard matrix generator. Here, as mentioned next, the orthogonal matrix may disperse outliers included in input data into different dimensions by an operation with the input data.

In operation 520, the dynamic quantization apparatus may perform the aforementioned operation (e.g., a multiplication operation) by applying the orthogonal matrix generated in operation 510 to the input data.

In operation 530, the dynamic quantization apparatus may detect the statistical information from the operation result obtained from operation 520. Here, the statistical information may correspond (i.e., be specific to) to a quantization unit.

FIG. 6 illustrates an example of a method of performing scaling on input data for each quantization unit to be quantized, according to one or more embodiments. Referring to FIG. 6, a dynamic quantization apparatus may perform scaling through operations 610 to 630 using a scaling factor determined in operation 420.

In operation 610, the dynamic quantization apparatus may determine whether the scaling factor determined in operation 420 is in the form of an FP.

When it is determined in operation 610 that the scaling factor is in the form of an FP, then in operation 620, the dynamic quantization apparatus may perform scaling on the input data by using an FP operator.

When it is determined in operation 610 that the scaling factor is not in the form of an FP, that is, when it is determined that the scaling factor is in the form of an INT, then in operation 630, the dynamic quantization apparatus may perform scaling on the input data by using a shifter. The dynamic quantization apparatus may perform scaling on the input data for each quantization unit.

FIG. 7 illustrates an example of a method of performing scaling on input data for each quantization unit, according to one or more embodiments. Referring to FIG. 7, a dynamic quantization apparatus may perform scaling for each quantization unit through operations 710 and 720.

In operation 710, when the quantization unit is a channel unit, the dynamic quantization apparatus may perform scaling by an operation between a scalar value corresponding to the channel unit and scalar values corresponding to the input data.

In operation 720, when the quantization unit is a block unit, the dynamic quantization apparatus may perform scaling by an operation between a vector value corresponding to the block unit and scalar values corresponding to the input data.

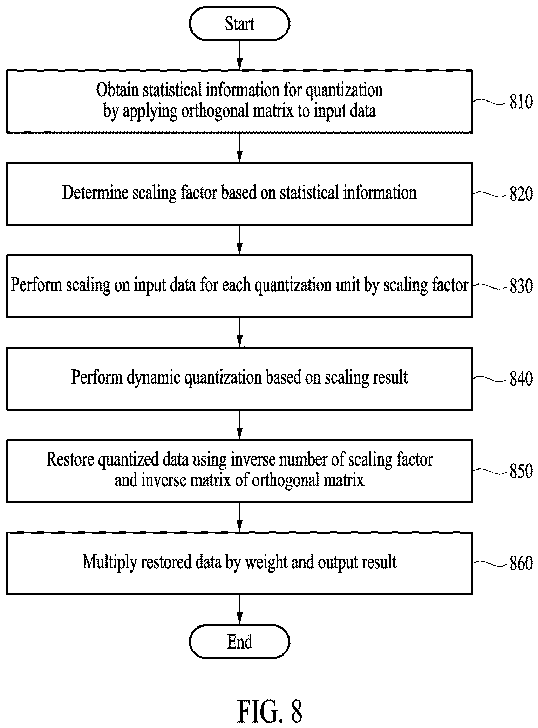

FIG. 8 illustrates an example of a dynamic quantization method, according to one or more embodiments. Referring to FIG. 8, a dynamic quantization apparatus may output the result of dynamic quantization through operations 810 to 860.

In operation 810, the dynamic quantization apparatus may obtain statistical information for quantization by applying an orthogonal matrix to input data in the form of an INT. The input data may be, for example, an activation function (i.e., activations) but is not necessarily limited thereto.

In operation 820, the dynamic quantization apparatus may determine a scaling factor based on the statistical information obtained from operation 810.

In operation 830, the dynamic quantization apparatus may perform scaling on the input data for each quantization unit by the corresponding scaling factor determined in operation 820. For example, when the input data is activation function data, the dynamic quantization apparatus may perform scaling by using the statistical information (e.g., the maximum value of the activations of the corresponding quantization unit) as the scaling factor. Here, the quantization unit may be a channel unit, a block unit, or a tensor unit but is not necessarily limited thereto. The dynamic quantization apparatus may perform scaling by selectively using different devices (e.g., an FP operator or a shifter) depending on whether the scaling factor is in FP form or is in INT form. Alternatively, the dynamic quantization apparatus may perform scaling by different operation methods (e.g., a scalar operation versus a scalar operation or a vector operation versus a scalar operation) depending on the quantization unit (e.g., a channel unit or a block unit). In addition, the dynamic quantization apparatus may determine the scaling factor differently for each quantization unit.

In operation 840, the dynamic quantization apparatus may perform dynamic quantization based on the scaling result obtained from operation 830, and may do so based on a target value set by a user or a target value automatically set by an algorithm.

In operation 850, the dynamic quantization apparatus may restore data quantized in operation 840 using the inverse of the scaling factor determined in operation 820 and using the transpose matrix of the orthogonal matrix used in operation 810. The transpose matrix of the orthogonal matrix may be pre-calculated offline. The dynamic quantization apparatus may calculate first restored quantized data by applying the inverse of the scaling factor to the data quantized in operation 840. The dynamic quantization apparatus may calculate quantized data of which a dimension is restored by multiplying the transpose matrix of the orthogonal matrix by the first restored quantized data (resulting in a quantized version of the input data from operation 810).

In operation 860, the dynamic quantization apparatus may multiply the quantized version of the input data (i.e., data restored in operation 850) by a weight and output the result. Here, the weight may be pre-calculated offline.

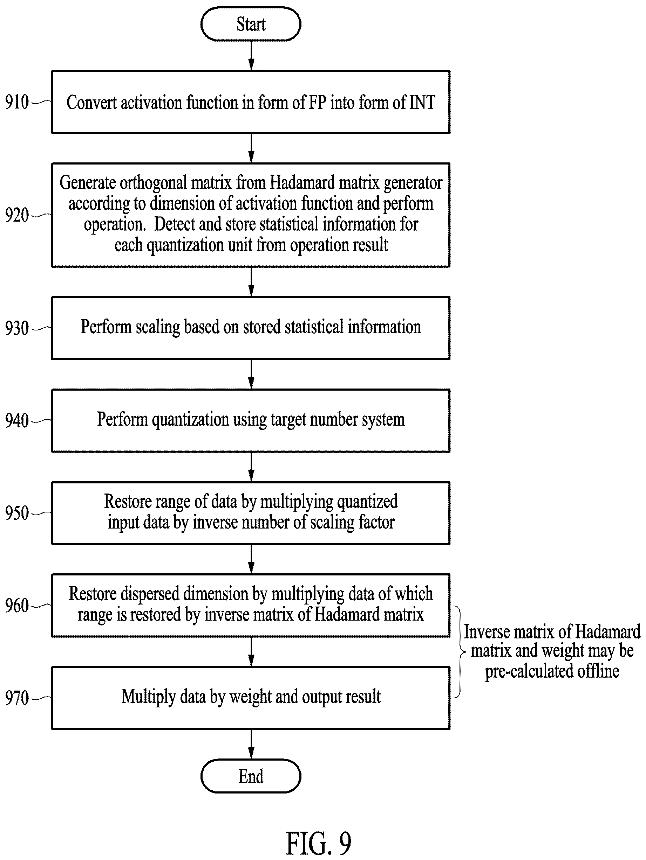

FIG. 9 illustrates an example of a dynamic quantization method, according to one or more embodiments. Referring to FIG. 9, a dynamic quantization apparatus may perform dynamic quantization through operations 910 to 970.

In operation 910, the dynamic quantization apparatus may convert an activation in FP form, which is input data, into an activation in INT form.

In operation 920, the dynamic quantization apparatus may generate an orthogonal matrix (e.g., a Hadamard matrix) from a matrix generator (e.g., a Hadamard matrix generator) according to the dimension of the input data (e.g., the activation function) (in INT form and as converted in operation 910) and may perform an operation between the orthogonal matrix and the input data in INT form.

In operation 920, the dynamic quantization apparatus may detect and store statistical information for each quantization unit from the operation result between the orthogonal matrix and the input data in the form of an INT. The dynamic quantization apparatus may obtain the statistical information used in a quantization process (more specifically, a scaling process for dynamic quantization) by applying the orthogonal matrix to the input data in INT form. The dynamic quantization apparatus may detect and store the statistical information for each quantization unit (e.g., a channel unit or a block unit) from the result obtained by the matrix generator, that is, the operation result between the orthogonal matrix and the input data in INT form.

In operation 930, the dynamic quantization apparatus may perform scaling based on the statistical information stored in operation 920. Scaling may express data with a smaller number of bits by reducing the range of values in the to-be-performed quantization process.

In operation 940, the dynamic quantization apparatus may perform quantization on the scaling result obtained from operation 930 using a target number system. Briefly, quantization reduces the bit size of the values in the quantized data, e.g., from 16 bits to 8 bits.

In operation 950, the dynamic quantization apparatus may restore (restore to the original range) the range of the data by multiplying the input data quantized in operation 940 by the inverse of the scaling factor used during scaling in operation 930.

In operation 960, the dynamic quantization apparatus may restore the dimension that is dispersed (as by an operation with the orthogonal matrix in operation 920, e.g., the Hadamard matrix) by multiplying the data of which the range is restored in operation 950 by the transpose matrix of the orthogonal matrix.

In operation 970, the dynamic quantization apparatus may multiply the data restored in operation 960 by a weight, for example, and output the result. Here, the transpose matrix of the Hadamard matrix in operation 960 and the weight in operation 970 may be pre-calculated offline.

Although quantization techniques disclosed herein are described with reference to weights and activations, the quantization techniques can be applied to any kind of data and are not limited to data of neural networks or the like. Moreover, source code can be formed with software engineering tools according to the descriptions herein, and instructions compiled from the source code may, when executed by a processor, cause a processor to perform the methods and operations described herein.

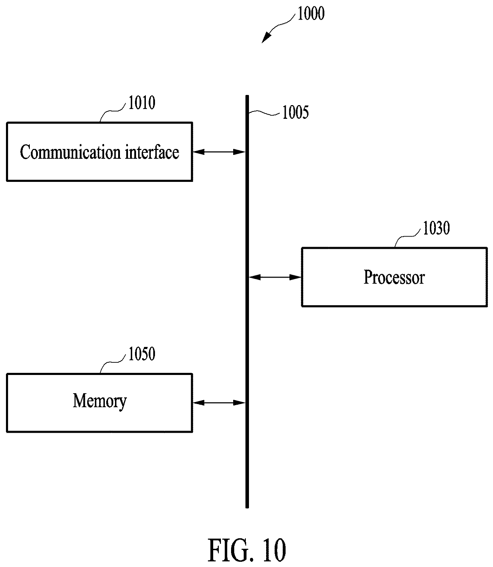

FIG. 10 illustrates an example of a dynamic quantization apparatus, according to one or more embodiments. Referring to FIG. 10, a dynamic quantization apparatus 1000 may include a communication interface 1010, a processor 1030, and a memory 1050.

The communication interface 1010 may receive input data. The input data may be input data in the form of an INT but is not necessarily limited thereto.

The processor 1030 (in practice, one or more processors of possibly different types) may obtain statistical information for quantization by applying an orthogonal matrix to the input data that is received through the communication interface 1010. The processor 1030 may determine a scaling factor that is determined based on the statistical information. The processor 1030 may perform scaling on the input data by the scaling factor. The processor 1030 may perform scaling on the input data for each quantization unit by the scaling factor. The processor 1030 may perform quantization on the scaling result. In addition, the processor 1030 may restore quantized data using an inverse number of the scaling factor and a transpose matrix of the orthogonal matrix. The processor 1030 may output a result of multiplying the restored data by a weight.

The memory 1050 may store a variety of information generated in the processing process of the processor 1030 described above. In addition, the memory 1050 may store various types of data and programs. The memory 1050 may include a volatile memory or a non-volatile memory. The memory 1050 may include a high-capacity storage medium such as a hard disk to store a variety of data.

In addition, the processor 1030 may perform at least one method described above with reference to FIGS. 1 to 9 or an algorithm corresponding to at least one method. The processor 1030 may be a data-processing device implemented by HW having a circuit of a physical structure to execute desired operations. For example, the desired operations may include code or instructions included in a program. The processor 1030 may be implemented as, for example, a central processing unit (CPU), a graphics processing unit (GPU), or a neural network processing unit (NPU). The dynamic quantization apparatus 1000 that is implemented as HW may include, for example, a microprocessor, a CPU, a processor core, a multi-core processor, a multiprocessor, an application-specific integrated circuit (ASIC), and a field-programmable gate array (FPGA).

The processor 1030 may execute the program and control the dynamic quantization apparatus 1000. Code of the program executed by the processor 1030 may be stored in the memory 1050.

The dynamic quantization apparatus 1000 may be implemented as various types of devices, such as a personal computer (PC), a server device, a mobile device, an embedded device, etc., and may correspond to, for example, a smartphone, a tablet device, an augmented reality (AR) device, an Internet of Things (IoT) device, and/or a medical device, which perform voice recognition, image recognition, image classification, etc., based on a neural network, but examples are not limited thereto. Furthermore, the dynamic quantization apparatus 1000 may correspond to a dedicated HW accelerator mounted in the devices described above or may be an HW accelerator, such as an NPU, a tensor processing unit (TPU), a memory operator, and/or a neural engine, which are dedicated modules for operating a neural network, but examples are not limited thereto.

FIG. 11 illustrates an example of a dynamic quantization apparatus, according to one or more embodiments. Referring to FIG. 11, a dynamic quantization apparatus 1100 may include an orthogonal matrix generator 1110, a statistical information extraction circuit 1120, a scaler 1130, a quantizer 1140, a descaler 1150, and a dequantizer 1160.

The orthogonal matrix generator 1110 may generate (or store and provide) various types of orthogonal matrices (e.g., a rotation matrix, a Hadamard matrix, or a matrix of an SGD method using Cayley transformation). The orthogonal matrix generator 1110 may be a Hadamard matrix generator but is not necessarily limited thereto.

The statistical information extraction circuit 1120 may perform an operation by applying an orthogonal matrix generated by the orthogonal matrix generator 1110 to input data and may detect statistical information from the operation result. The statistical information extraction circuit 1120 may detect the statistical information corresponding to a quantization unit from the operation result. The statistical information extraction circuit 1120 may include, for example, the maximum value detector, an average value detector, and/or a variable operator, depending on the type of statistical information.

The scaler 1130 may perform dynamic scaling by determining a scaling factor that is determined based on the statistical information. The scaler 1130 may perform dynamic scaling by selectively using different devices depending on the type of scaling factor. The scaler 1130 may include an FP operator 1133 and a shifter 1136. For example, when the scaling factor is in the form of an FP, the scaler 1130 may perform scaling on the input data by using the FP operator 1133. Alternatively, when the scaling factor is in the form of an INT, the scaler 1130 may perform scaling on the input data by using the shifter 1136.

The FP operator 1133 and/or the shifter 1136 may perform scaling on the input data for each quantization unit.

The quantizer 1140 may perform quantization on the scaling result of the scaler 1130.

The descaler 1150 may generate an inverse number of the scaling factor and perform descaling by multiplying the quantization result by the inverse number of the scaling factor.

The dequantizer 1160 may generate a transpose matrix of the orthogonal matrix and restore quantized data by multiplying the descaling result of the descaler 1150 by the transpose matrix of the orthogonal matrix. The dequantizer 1160 may multiply the restored data by a weight and output the result.

The computing apparatuses, the electronic devices, the processors, the memories, the information output system and hardware, the storage devices, and other apparatuses, devices, units, modules, and components described herein with respect to FIGS. 1-11 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-11 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

## Claims

1. A dynamic quantization method performed by a computing device and comprising:
applying an orthogonal matrix to input data and obtaining statistical information for quantization based thereon;
determining a scaling factor based on the statistical information;
performing scaling on the input data by the scaling factor; and
performing dynamic quantization on the scaled input data.

2. The dynamic quantization method of claim 1, wherein the orthogonal matrix is generated, and wherein the applying the orthogonal matrix to the input data comprises multiplying the orthogonal matrix by the input data, and wherein the statistical information is obtained by determining a statistic of a result of the multiplying,
and/or
wherein the statistical information comprises a statistic of a result of applying the orthogonal matrix to the input data, and wherein the statistic comprises an average value, a maximum value, or a variable.

3. The dynamic quantization method of claim 1 or 2, wherein the orthogonal matrix is formed by {-1,0,1},
and/or
wherein the input data comprises quantization units, and wherein the determining of the scaling factor comprises determining the scaling factor differently for each quantization unit.

4. The dynamic quantization method of one of the previous claims, wherein the performing of the scaling comprises:
determining whether the input data is in floating-point (FP) form or integer (INT) form, and performing the scaling on the input data by selectively, according to the determined form of the input data, using a floating-point (FP) operator or a shifter.

5. The dynamic quantization method of one of the previous claims, wherein the input data comprises quantization units, and wherein the performing of the scaling comprises performing the scaling for each quantization unit.

6. The dynamic quantization method of claim 5, wherein the performing of the scaling on the input data for a quantization unit comprises:
in response to the quantization unit being a channel unit, performing the scaling by an operation between a scalar value corresponding to the channel unit and a scalar value corresponding to the input data; and
in response to the quantization unit being a block unit, performing the scaling by an operation between a vector value corresponding to the block unit and a scalar value corresponding to the input data,
in particular,
wherein the each quantization unit is a channel unit, a block unit, or a tensor unit.

7. The dynamic quantization method of one of the previous claims, wherein the performing of the dynamic quantization on the scaled input data is further based on a target quantization value set by a user or set automatically by an algorithm.

8. The dynamic quantization method of one of the previous claims, further comprising:
restoring the dynamically quantized scaled input data using the inverse of the scaling factor and using an inverse matrix of the orthogonal matrix; and
multiplying the restored dynamically quantized scaled input data by a weight and outputting a result.

9. The dynamic quantization method of claim 8, wherein the restoring of the dynamically quantized scaled input data comprises:
calculating first restored dynamically quantized scaled input data by applying the inverse of the scaling factor to the dynamically quantized scaled input data; and
multiplying the transpose of the orthogonal matrix by the first restored quantized data,
and/or
wherein the transpose of the orthogonal matrix and the weight are pre-calculated offline.

10. The dynamic quantization method of one of the previous claims, further comprising:
in response to the input data being in floating point (FP) form, converting the input data in FP form into an integer (INT) form before applying the orthogonal matrix to the input data.

11. A non-transitory computer-readable storage medium storing instructions that, when executed by one or more processors, cause the one or more processors to perform the dynamic quantization method of one of the previous claims.

12. A dynamic quantization apparatus comprising:
one or more processors; and
memory storing instructions configured to cause the one or more processors to perform the dynamic quantization method of one of claims 1 to 10.

13. The dynamic quantization apparatus of claim 12, wherein the orthogonal matrix is generated, wherein the applying the orthogonal matrix to the input data comprises multiplying the orthogonal matrix by the input data, and wherein the statistical information is obtained by determining a statistic of a result of the multiplying.

14. The dynamic quantization apparatus of claim 12 or 13, wherein the instructions are further configured to cause the one or more processors to determine whether the input data is in floating-point (FP) form or integer (INT) form and perform the scaling on the input data by selectively, according to the determined form of the input data, using a floating-point (FP) operator or a shifter,
and/or
wherein the input data comprises quantization units, the scaling factor is determined differently for each quantization unit, and each quantization unit is a channel unit, a block unit, or a tensor unit.

15. A method of quantizing input data, the method comprising:
storing, in a memory, input data;
generating, by one or more processors, an input matrix by multiplying the input data by an orthogonal matrix;
determining, by the one or more processors, a downscaling factor based on a statistic derived from the input matrix;
downscaling, by the one or more processors, the input matrix with the downscaling factor;
generating, by the one or more processors, a quantized input matrix by reducing a bit-size of elements of the downscaled input matrix;
upscaling, by the one or more processors, the quantized input matrix with the inverse of the downscaling factor; and
generating, by the one or more processors, a quantized version of the input data by applying the transpose of the orthogonal matrix to the upscaled quantized input matrix.
